(19) Europäisches Patentamt
European Patent Office
Office européen des brevets

(11)  **EP 3 004 492 B1**

(12)  **EUROPEAN PATENT SPECIFICATION**

(45) Date of publication and mention
of the grant of the patent:
**05.04.2017  Bulletin 2017/14**

(51) Int Cl.:
***E04H 12/02*** *(2006.01)*    ***H02G 7/20*** *(2006.01)*
***E04H 12/24*** *(2006.01)*

(21) Application number: **14733709.1**

(86) International application number:
**PCT/IB2014/061783**

(22) Date of filing: **28.05.2014**

(87) International publication number:
**WO 2014/191935 (04.12.2014 Gazette 2014/49)**

(54) **A POLE STRUCTURE**

PFEILERSTRUKTUR

STRUCTURE DE POTEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2013  FI 20135594**

(43) Date of publication of application:
**13.04.2016  Bulletin 2016/15**

(73) Proprietor: **Jerol Industri AB**
**815 22 Tierp (SE)**

(72) Inventor: **JERNSTRÖM, Rolf**
**FIN-10600 Ekenäs (FI)**

(74) Representative: **Seppo Laine Oy**
**Itämerenkatu 3 B**
**00180 Helsinki (FI)**

(56) References cited:
**EP-A2- 0 803 622       WO-A1-94/26501**
**WO-A2-2011/112122    DE-B- 1 151 365**
**GB-A- 873 354**

# Description

## Field of the invention

The invention relates to above-ground support structures suited for use in electrical grids, in the support of rail transport overhead contact lines, in lighting arrangements and corresponding applications. In particular, the invention relates to a composite pole structure according to claim 1.

## Background of the invention

Power cables and outdoor lighting fixtures are often suspended using poles. Such poles should carry the weight of the suspended equipment, and in addition they should resist the stress of the lateral and torsional forces caused by asymmetrical load, wind, and snow and ice loads. Traditionally, such poles have been made from wood or metal, and occasionally of concrete. Poles made from these materials are heavy and each is associated with specific drawbacks.

Wooden poles have a tendency to rot, and consequently they have traditionally been impregnated with creosote which is an effective and economical anti-rot agent. In addition, wooden poles are susceptible to attack by insects and birds, especially woodpeckers. Toxicologically, creosote is a very questionable substance and its use has become severely limited. Pressure impregnated wood is an alternative to creosote-treated wood, but it leaches at least copper into the environment. The dissolution of toxic agents into the environment is a serious problem especially in groundwater areas. Also the use of pressure impregnated wood has been gradually limited.

Steel poles, again, are susceptible to rusting and require regular monitoring and maintenance. Steel subjected to climate stress is often zinc coated, and it has been observed that the coating releases chromium to the extent that zinc coating cannot be used in groundwater areas. A steel pole is heavy and requires heavy duty lifting equipment. It is more expensive than a wooden pole.

A risk factor associated with poles supporting power lines is their conductivity. It is well known that steel is a good electrical conductor, and isolation arrangements are demanding when steel poles are used. Also the conductivity of wood can be significant, depending on its internal humidity which may vary considerably; thus, a wooden pole is particularly troublesome from the view of occupational safety.

Concrete poles are extremely heavy and tend to form microcracks, through which humidity penetrates to the reinforcement material which normally is steel, resulting in rusting and weakening of the structure.

Poles made from composite plastics solve many of the problems associated with traditional poles. Their strength properties are excellent, they have no rot or corrosion problems and are not susceptible to insects or woodpeckers. Additionally, their isolation properties are significantly better than those of wooden and metal poles, and those properties remain constant.

Composite poles can be manufactured using laminating techniques, in which reinforcement fiber and a hardening polymer are layered on a mandrel. Another method is pultrusion, in which reinforcement fiber is pulled through a polymer in a fluid state and the wetted fiber is pulled through a heated nozzle acting as a die, whereby the article obtains its shape and the polymer hardens.

Composite poles are manufactured with a conical or an uniformly thick profile depending on the application. In both cases, the wall thickness can be optimized from root to top, in order to achieve the desired properties in terms of strength and centre of gravity. One method for designing a conical, hollow pole of reinforced plastic using laminating technology is disclosed in US patent 5,704,187. To achieve desired strength properties, composite have also been designed with angular cross sections, as disclosed in a.o. US patent 5,175, 971 and International patent application WO 98/30768; and using various internal structures as in International patent application WO 2007/018962. Further, composite poles have been assembled from various different profiles as in e.g. US patent application US 2012011804 and International patent application WO 2005/067545.

In German laid-open publication DE 1 151 365, a steel pole construction is disclosed consisting of two pairs of poles connected in a ladder fashion by vertical struts. The upper ends of the pole pairs are connected while the root ends are separated, the structure forming a unit shaped as a narrow letter A when seen from the side.

In order to achieve a sufficient strength as the pole size increases, the wall thickness of a hollow tubular pole must be increased to the first power, while the strength increases to the power of two as the diameter is increased. The higher the pole is, the larger is the sway. This phenomenon is not significant in the case of a low-voltage distribution grid, but when moving to e.g. major transfer lines in which longer spans are used, the pole size increases significantly. To minimize sway, very large and rigid structures must be used.

On the other hand, a structure cannot be made too rigid as this leads to premature failure of the power line suspension components. The structure must be sufficiently flexible since the force acting on it due to wind or other asymmetrical loading decreases as the deflection increases, and a pole structure should be allowed to flex within the limits set by the line structure as a whole. It has been observed, however, that high composite poles in particular can turn out too flexible, which is also a disadvantage. EP0803622 discloses a pole structure comprising a plurality of tubes, preferably three tubes comprising plastic and metal parts and defining a uniform prism, said at least three tubes being connected by horizontal plates in order to provide resistance against torsion.

## Summary of the invention

A pole structure according to claim 1 has now been invented which solves the problems arising from increasing pole size.

Instead of a single pole having a large diameter, a structure is assembled from several essentially vertical composite-structure smaller diameter poles and essentially horizontal brackets connecting these, which structure provides considerably better strength and flexing properties in relation to a single pole, with a simultaneous saving in material. The brackets are located at a vertical distance from each other which is at least ten times the pole diameter.

To the essentially vertical poles, reference is made below by the expression vertical pole. "Essentially vertical" means that the vertical pole is meant to be mounted in a vertical position and deviations from the ideally vertical state are due only to mounting tolerances or asymmetrical load.

"Diameter" here refers to the largest dimension of the cross section of a pole or profile.

Preferably, the uppermost bracket is located below the plane of the upper ends of the vertical poles. Preferably, the distance of the uppermost bracket from the top ends of the poles corresponds to at least the largest dimension in the vertical direction of a support beam, cross strut or other structural part which is to be mounted on top of the bracket.

The brackets may be implemented in several ways, and they may be composed of several, possibly different parts. "Essentially horizontal" refers to the bracket as a whole. For example, two bracket parts mounted at slight, opposed angles may satisfy this condition.

Strength advantages are achieved also using e.g. steel, but the most advantages are achieved when composite structures are used, due to their electrical isolation properties. The horizontal brackets and a sufficient distance between them eliminate or minimize the possibilities for electric leakage occurring in traditional truss structures. In truss designs, leak currents can occur along paths formed by the skewed support structures, especially in metal constructions.

An embodiment of the invention is a portal structure comprising two pole structures or portal stems assembled from two essentially vertical poles of sufficient length, connected by means of at least two brackets, said portal stems being connected by at least one transversal beam in addition to the beam used for suspending the cables. In case a similar structure includes more than two stems, it can be referred to as a multistem structure instead of a portal structure.

Preferably at least one transversal beam is essentially horizontal, and it can have the same diameter as the vertical poles.

The connection points, where the vertical poles join the horizontal beam, should be of a rigid construction. Hereby is implied that the joint is designed so that it has no properties comparable to a swivel or hinge whose construction would allow sliding or turning movements.

The construction makes possible the use of a smaller and more economical tube size in comparison to structures involving single poles, however avoiding the disadvantages in economy, safety and transport associated with an actual truss structure. Climbing in a structure according to the invention is not possible without special equipment, whereas even children can often climb a truss with fatal consequences. For this reason, there is a desire in the field to avoid the use of truss structures.

The structure also makes possible the economical use of composite poles when building e.g. high voltage lines requiring large size poles.

In relation to the prior art, the essentially vertical composite pole structure according to the invention has the advantage that the location of the brackets can be freely chosen. Thus, ideal mounting facilities are provided for the structural part connected to the bracket for supporting cables. In the case of the aforementioned portal structure, a sort of shelf is formed for the uppermost transversal beam which is adapted to suspend cables, usually using intermediate isolators. This beam may be robust due to the forces acting on it, and therefore heavy. A composite pole structure according to the invention is light in proportion to its strength, in particular compared to a steel structure the weight of which would give rise to difficulties and costs at the installation stage.

A composite pole structure according to the invention becomes so light that it may be handled by helicopter. If the helicopter's lifting capacity is small, a portal structure can be erected in two steps: First, the portal is erected without the uppermost vertical beam and subsequently the upper beam with its isolators can be safely lowered into the U-shapes structures formed by the vertical, parallel pole pairs and the brackets.

## Brief description of the drawings

Figure 1 is a perspective view of a pole structure according to the invention.
Figure 2 shows an embodiment of the connection between the transversal beam and the vertical poles.
Figure 3 shows another embodiment of the connection between the transversal beam and the vertical poles.
Figure 4 shows an embodiment of the connection between a third transversal beam, simultaneously acting as support for cables, and the vertical poles.

## Detailed description

The invention is disclosed in more detail in the following with reference to the attached drawings.

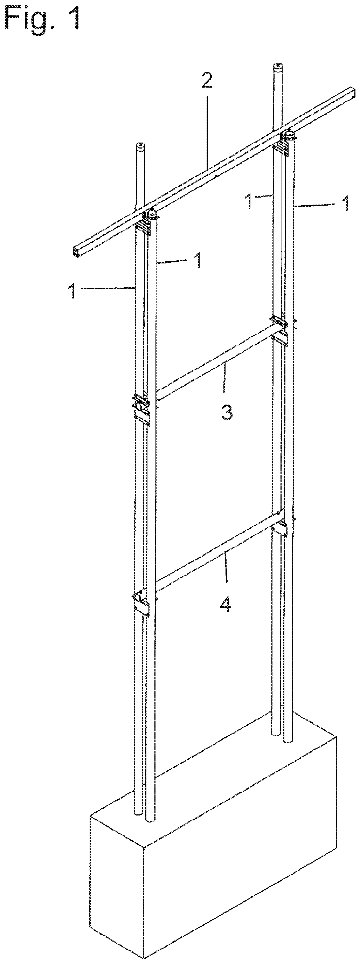

Figure 1 shows an embodiment of the pole structure according to the invention, in which embodiment a portal structure has been implemented (i.e. comprising two vertical parts or portal stems) using composite poles. The structure includes vertical poles 1, of which there are two in each portal stem i.e. four in all, brackets 5 connecting the vertical poles, and transversal beams 2, 3 and 4. The task of transversal beam 2 is, in addition to strengthening the structure, to provide suspension of the cables. Transversal beams 3 and 4 guarantee the strength of the structure and form three-point joints together with the brackets and the vertical poles. At the connecting point, support is provided from both vertical poles as well as from the fastening point of the other end of the transversal beam. As a consequence, the usually employed stay cables or bracing struts are not required.

Since the parts of the structure according to the invention are interconnected in such a way as to form a three-point support principally at each connecting point, a combination is formed whose buckling properties are excellent.

The effective buckling length appears as the distance between the connection points of the vertical poles and the transversal beams. In the embodiment shown, this leads to the buckling strength almost tripling.

In a pole having a fixed root end and the other end being free, the buckling strength is

$$F_k = \pi^2/4 * E * I/l^2$$

(Euler's formula)

A pole having a fixed root end and the other end having a three-point support, the buckling strength is

$$F_k = 2\pi^2 * E * I/l^2$$

The supported one thus has an eight-fold buckling strength compared to the non-supported. If the support is locked in three dimensions, a 16-fold buckling strength is obtained:

$$F_k = 4\pi^2 * E * I/l^2$$

Thus, if there are three vertical poles per stem and three locked connection points along the length of the pole, the buckling strength of the total structure according to the example is almost a hundred fold compared to that of a single pole used in the structure (16 x 2 x 3).

Preferably, the length of the vertical poles is in the range 16 to 36 m and their diameter in the range 110 to 350 mm.

Preferably, the length of the transversal beams is in the range of 2 to 6 m, which thus is a preferred distance between the vertical pole structures.

In the embodiment shown, there are three transversal beams. The uppermost transversal beam in the embodiment shown is a hollow metal beam having a square section profile, but it may also be a profile made from e.g. composite.

The lower transversal beams are here provided from the same tube profile as the vertical poles, but they may be made from another profile.

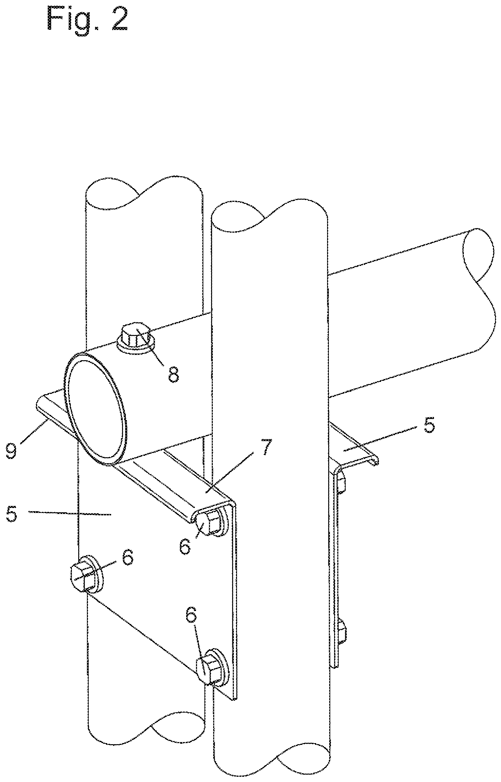

The connections between the transversal beams and the vertical poles are shown in Figures 2 to 4. The connection between the lowermost transversal beam and the vertical poles, shown in Figure 2, is implemented as a two-part bracket, i.e. using two metal plates 5 bent at a right angle and fastened with through bolts 6 on both sides of the vertical poles such that one, narrower portion 7 is horizontal. The transversal beam rests on the horizontal portions 7 of the metal plates 5 and is attached to them with through bolts 8 (of which one is visible). To increase stiffness, a further edge fold 9 is present on the narrow portion 7 of metal plate 5. There are preferably at least two bolts 6 per vertical pole.

The bracket can also be implemented e.g. as a single part, on one side of the vertical pole.

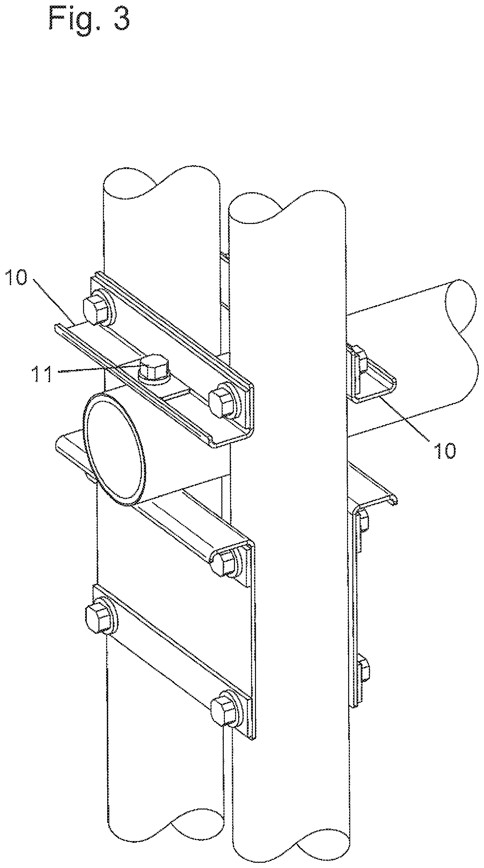

In Figure 3 is shown a joint between the middle transversal beam and the vertical poles, having a four-part bracket. In addition to the parts shown in Figure 2, the joint comprises a second pair of folded metal plates 10 situated above the transversal beam. Through bolts 11 corresponding to through bolts 8 penetrate also metal plates 10.

It has been observed that in special cases, for example if one power cable breaks for some reason, asymmetrical forces affect the pole structure, and in that case greater stress is put especially on the joint sections. It has been shown that the largest of these stresses occur especially in the centermost joint.

The design shown in Figure 3 is one way of ensuring that the forces acting on the joint sections do not exceed the strength of the joint parts.

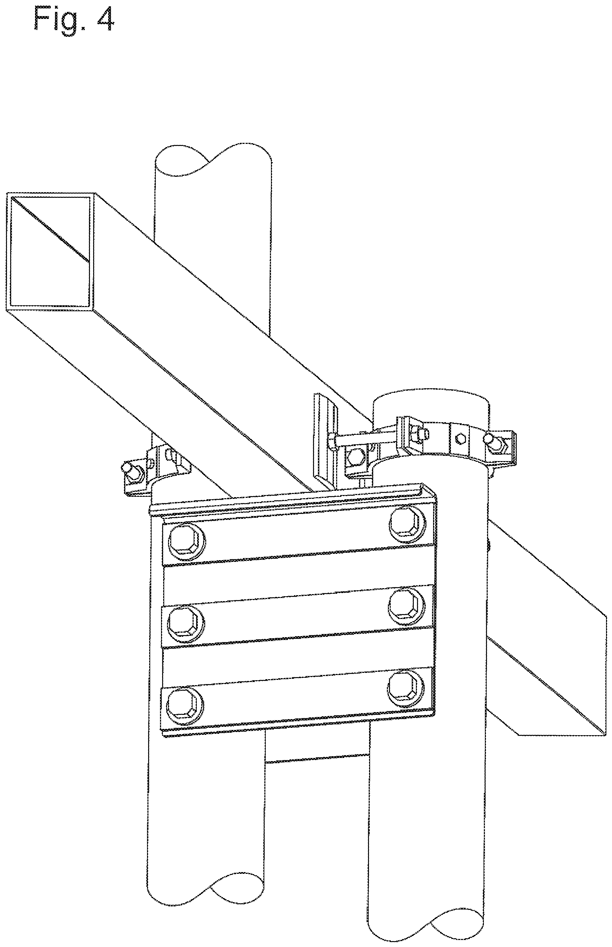

In Figure 4 is shown one way of attaching the transversal beam for suspending the cables to the vertical poles. This design for fastening a beam to a single pole is conventional in the field. Standard parts are adapted to fit the design according to the invention.

Preferably, one of the poles in each pole pair is 1 to 2 m higher than the other, and can be used for suspending grounding cables/neutral conductors.

The poles making up the structure are preferably tubular, i.e. hollow. They may be regularly cylindrical or e.g. conical, and their wall thickness may vary, in particular in the longitudinal direction.

The advantages according to the invention are achieved in particular when the poles are situated at a distance from each other. Preferably, the distance is at least half of the diameter of a single pole, whereby the diameter, as above, refers to the greatest dimension of a profile cross section.

The structure according to the invention provides significant advantages compared to designs involving unitary poles. If a pole of corresponding height and carrying capacity would be implemented as a single pole, its diameter would be multiple in relation to the largest total dimension of a section of a two-pole structure according to the invention. In addition, it would likely be necessary to use a conical structure and optimize the wall thickness, which would vary in the various parts of the pole. A structure according to the invention can be implemented using tube of invariable size and wall thickness.

For the same reason, it is possible to reduce sway significantly, even to below 1/3 in comparison to single pole designs. A common disadvantage in single composite poles is their flexibility, due to which sway in e.g. strong winds may pose a problem.

The strength of composite poles is already great as such, but the brackets lock the vertical poles together so as to minimize the flexibility. A rigid and light structure is achieved with few brackets compared to a steel pole structure of the same weight. By locking composite-built vertical poles together at a few locations, a light and very stiff pole structure compared to the prior art is provided.

The portal structure shown in Figure 1 is only one example of the implementation of pole structures according to the invention. A structure according to the invention using two or more vertical poles can be implemented with e.g. a suspension beam extending to one side only.

By adding pole structures in such a way that more than two, as in the portal structure in the example above, are present, resulting in a multistem structure, significant advantages in relation to conventional structures can still be achieved.

## Claims

1. A pole structure built from composite material, consisting of two parallel, essentially vertical poles or profiles (1) joined together by means of stiff, essentially horizontal brackets (5) forming connection points attaching the poles rigidly to each other, whereby the distance between brackets (5) in the vertical direction is at least 10 times the pole diameter.

2. A pole structure according to claim 1, **characterized in** the uppermost bracket (5) being located essentially below the plane of the top ends of the essentially vertical poles.

3. A pole structure according to claim 2, **characterized**

**in that** the distance of the uppermost bracket (5) from the top ends of the essentially vertical poles corresponds to the vertical dimension of a structural member to be placed on the bracket.

4. A pole structure according to any previous claim, **characterized in that** the said two poles (1) are cylindrical.

5. A pole structure according to any previous claim, **characterized in that** the said two poles (1) are conically tapered.

6. A pole structure according to any previous claim, **characterized in that** the said two poles (1) are tubular.

7. A pole structure according to any previous claim, **characterized in that** the said two poles (1) are located at a distance from each other, which distance is at least half of the diameter of a single pole.

8. A structure comprising several pole structures according to any previous claim, **characterized in that** the pole structures are connected by means of at least two transversal beams attached to the brackets (5).

9. A structure according to claim 8, **characterized in that** it is a portal structure.

10. A portal structure according to claim 9, **characterized in that** there are three transversal beams (2,3,4).

## Patentansprüche

1. Stangenanordnung, die aus einem Verbundwerkstoff konstruiert ist, die aus zwei parallelen, im Wesentlichen vertikalen Stangen oder Profilen (1) besteht, die durch steife, im Wesentlichen horizontale Halterungen (5) verbunden sind, die Verbindungspunkte bilden, die die Stangen fest aneinander befestigen, wobei der Abstand zwischen Halterungen (5) in der vertikalen Richtung mindestens das 10-fache des Stangendurchmessers ist.

2. Stangenanordnung nach Anspruch 1, **dadurch gekennzeichnet, dass** die oberste Halterung (5) im Wesentlichen unter der Ebene der oberen Enden der im Wesentlichen vertikalen Stangen angeordnet ist.

3. Stangenanordnung nach Anspruch 2, **dadurch gekennzeichnet, dass** der Abstand der obersten Halterung (5) von den oberen Enden der im Wesentlichen vertikalen Stangen der vertikalen Abmessung eines auf der Halterung zu platzierenden Konstruktionselements entspricht.

**4.** Stangenanordnung nach einem der vorhergehenden Ansprüche, **dadurch gekennzeichnet, dass** die zwei Stangen (1) zylindrisch sind.

**5.** Stangenanordnung nach einem der vorhergehenden Ansprüche, **dadurch gekennzeichnet, dass** die zwei Stangen (1) konisch verjüngt sind.

**6.** Stangenanordnung nach einem der vorhergehenden Ansprüche, **dadurch gekennzeichnet, dass** die zwei Stangen (1) röhrenförmig sind.

**7.** Stangenanordnung nach einem der vorhergehenden Ansprüche, **dadurch gekennzeichnet, dass** die zwei Stangen (1) in einem Abstand voneinander angeordnet sind, wobei der Abstand mindestens die Hälfte des Durchmessers einer einzelnen Stange ist.

**8.** Konstruktion, die mehrere Stangenanordnungen nach einem der vorhergehenden Ansprüche umfasst, **dadurch gekennzeichnet, dass** die Stangenanordnungen durch mindestens zwei Querträger, die an den Halterungen (5) befestigt sind, verbunden sind.

**9.** Konstruktion nach Anspruch 8, **dadurch gekennzeichnet, dass** sie eine Portalkonstruktion ist.

**10.** Portalkonstruktion nach Anspruch 9, **dadurch gekennzeichnet, dass** es drei Querträger (2, 3, 4) gibt.

**Revendications**

**1.** Structure polaire construite à partir d'un matériau composite constitué de deux pôles ou profilés parallèles sensiblement verticaux (1) joints ensembles au moyen de potences rigides sensiblement horizontales (5) formant des points de raccordement fixant les pôles de manière rigide l'un à l'autre, dans lequel la distance entre potences (5) dans la direction verticale est d'au moins 10 fois le diamètre des pôles.

**2.** Structure polaire selon la revendication 1, **caractérisée en ce que** la potence (5) la plus élevée est située sensiblement en dessous du plan des extrémités supérieures des pôles sensiblement verticaux.

**3.** Structure polaire selon la revendication 2, **caractérisée en ce que** la distance de la potence (5) la plus élevée des extrémités supérieures des pôles sensiblement verticaux correspond à la dimension verticale d'un élément structurel à placer sur la potence.

**4.** Structure polaire selon l'une quelconque des revendications précédentes, **caractérisée en ce que** lesdits deux pôles (1) sont cylindriques.

**5.** Structure polaire selon l'une quelconque des revendications précédentes, **caractérisée en ce que** lesdits deux pôles (1) sont coniques.

**6.** Structure polaire selon l'une quelconque des revendications précédentes, **caractérisée en ce que** lesdits deux pôles (1) sont tubulaires.

**7.** Structure polaire selon l'une quelconque des revendications précédentes, **caractérisée en ce que** lesdits deux pôles (1) sont situés à une certaine distance l'un de l'autre, laquelle distance est d'au moins la moitié du diamètre d'un pôle individuel.

**8.** Structure comprenant plusieurs structures polaires selon l'une quelconque des revendications précédentes, **caractérisée en ce que** les structures polaires sont raccordées au moyen d'au moins deux poutres transversales fixées aux potences (5).

**9.** Structure selon la revendication 8, **caractérisée en ce qu'**il s'agit d'une structure de type portique.

**10.** Structure de portique selon la revendication 9, **caractérisée en ce qu'**il s'agit de trois poutres transversales (2, 3, 4).

Fig. 1

Fig. 2

# Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5704187 A
- US 5175971 A
- WO 9830768 A
- WO 2007018962 A
- US 2012011804 A
- WO 2005067545 A
- DE 1151365
- EP 0803622 A